# EUROPÄISCHE PATENTSCHRIFT

(11) **EP 2 585 255 B1**
(45) Veröffentlichungstag und Bekanntmachung des Hinweises auf die Patenterteilung: **28.08.2019**
(21) Anmeldenummer: 11758370.8
(22) Anmeldetag: 15.06.2011
(51) Int. Cl.: B25B 29/02, B23P 19/06

(54) **SCHRAUBENSPANNVORRICHTUNG**
SCREW TENSIONING DEVICE
DISPOSITIF DE SERRAGE DE VIS

(30) Priorität: 16.06.2010 DE 102010017403
(43) Veröffentlichungstag der Anmeldung: 01.05.2013
(73) Patentinhaber: ITH GmbH & Co. Kg, 59872 Meschede (DE)
(72) Erfinder: KÄSTNE, Lars, 01099 Dresden (DE)
(74) Vertreter: Drechsler, Gottfried
(86) Internationale Anmeldenummer: PCT/DE2011/075133
(87) Internationale Veröffentlichungsnummer: WO 2012/022319

(56) Entgegenhaltungen:
- GB-A- 1 511 300
- GB-A- 2 295 433

## Beschreibung

Die Erfindung betrifft eine neuartige Schraubenspannvorrichtung mit einem Schraubenspannzylinder mit einer hydraulischen Hochdruckpumpe zum Vorspannen von Schrauben und Lösen von hochfest vorspannbaren Schraubverbindungen und ein Verfahren zur Steuerung dieser Schraubenspannvorrichtung.

Neben den Grundformen von verschiedenen Schraubenverbindungen werden schon seit Jahrzehnten sogenannte hochfest vorspannbare Schraubenverbindungen vor allem im Stahlbau eingesetzt. Hierfür gibt es verschiedene Schraubenspannvorrichtungen. Diese Schraubenspannvorrichtungen funktionieren in der Regel alle nach dem gleichen bekannten Prinzip auf der Basis von drehmomentlosen Vorspannverfahren. Hierbei wird ein sich auf dem zu verspannenden Bauteil oder Maschinenteil abstützender Schraubenspannzylinder auf das über der Mutter stehende Gewindeende eines zu verspannenden Gewindebolzens mit einem beweglichen Arbeitskolben oder einer im Arbeitskolben befindlichen Gewindebuchse aufgeschraubt. Am Schraubenspannzylinder wird anschließend eine hydraulische Hochdruckpumpe angeschlossen, welche die Kolbenringseite mit Druck beaufschlagt und somit ein Einfahren des Arbeitskolbens und das Vorspannen des Gewindebolzens bewirkt. Durch beidrehen der Mutter auf das Maschinenteil bis zum Anschlag behält der Gewindebolzen nach der Druckentlastung der Kolbenringseite seine Vorspannkraft und verspannt das Maschinenteil. Derartige hydraulische Schraubenspannvorrichtungen in mehrstufiger Bauweise sind beispielsweise in der DE 10 2004 043 145 B3, in der DE 196 38 901 A1 und in der GB 22 91 155 A beschrieben. Die einstufige Bauweise ist beispielsweise in der EP 0 200 459 A2 ausführlich beschrieben. In der EP 2 014 932 A2 ist ein Verfahren zum Verbinden oder Befestigen von Bauteilen unter Verwendung einer hochfest vorspannbaren Verbindung geschaffen, welche eine besonders günstige dosierte Vorspannung ermöglichen soll. Dabei wird eine spezielle Dimensionierung des überstehenden Schraubenschaftes, der Schraubenmutter unter Zuhilfenahme einer überdimensionierten Unterlegscheibe vorgeschlagen. Auch in dieser technischen Lösung wird die als Schraubenspannvorrichtung auf einen hydraulisch wirkenden Schraubenspannzylinder eingegangen. Allerdings ist diese Ausführung nur für bestimmte speziell vorgespannte Schraubenverbindungen geeignet und nicht universell einsetzbar.

Die Vorteile des hochfesten Vorspannverfahrens gegenüber dem Anziehen der Schraubverbindung durch Aufbringung eines alleinigen Drehmomentes auf die Schraubenmutter liegen grundsätzlich darin, dass der Gewindebolzen während des Anziehvorganges nicht zusätzlich auf Torsion beansprucht wird und dass keine Reibungskräfte im Gewinde und an der Muttemauflage auftreten. Hierdurch ist es möglich wesentlich höhere Vorspannkräfte in der Schraubverbindung gegenüber einem normalen Anziehen der Schraubenmutter zu realisieren und deren Tragfähigkeit wirkungsvoll zu erhöhen. Besonders bei größeren Gewindedurchmessern über 30 mm treten erfahrungsgemäß sehr große Streuungen der Reibkräfte auf, wodurch die Tragfähigkeit erheblich herab gesetzt wird, wenn das Anziehen der Schraubenmutter mittels eines reinen Drehmoments durchgeführt wird.

Neben den beschrieben Vorteilen besteht ein wesentlicher Nachteil der hydraulischen Schraubenspannvorrichtungen nach dem Stand der Technik darin, dass zum Betrieb der Geräte zusätzliche kostenintensive hydraulische Hochdruckpumpen benötigt werden. Ebenso sind hochdruckfeste Hydraulikleitungen, oftmals zudem sogar sehr lange Hydraulikleitungen zur Verbindung von Pumpe und Schraubenspannvorrichtung notwendig. Besonders bei beengten Platzverhältnissen, wie zum Beispiel in der Gondel einer Windenergieanlage, wo derartige Systeme häufig eingesetzt werden, führen die sperrigen Hydraulikleitungen zu Problemen und zu aufwendigen Vorbereitungsarbeiten. Die Leitungen können nur in relativ großen Radien verlegt werden, da sie nicht geknickt werden dürfen wodurch ein großer Platzbedarf resultiert.

Häufig müssen auch mehrere hochfeste Schraubverbindungen mit ebenso vielen Schraubenspannvorrichtungen gleichzeitig angezogen werden, wodurch erhebliche Aufwendungen in der Vorbereitung der Hydraulikleitungen und bei Ihrer Installation vor Ort entstehen können. Zusätzlich muss auch die Pumpe an den jeweiligen Montageort transportiert, und dort entsprechend mit ausreichend Energie versorgt werden. Besonders anschaulich wird das Problem der zusätzlichen Ausrüstung bei Arbeiten unter Wasser, wie sie etwa in der Offshoreindustrie häufig auftreten. Hier werden sehr lange Hochdruckleitungen von der Pumpe von einem Schiff oder einer Plattform aus bis zum Montageplatz unter Wasser benötigt. Hydraulikflüssigkeiten sind in der Regel zusätzlich noch umweltschädlich und bedürfen deshalb bei bestimmten Einsatzfällen eine Reihe von aufwändigen kostenintensiven Maßnahmen. Es gibt auch Einsatzfälle, wo die Anwendung von Hydraulikflüssigkeiten generell nur unter strengen Sicherheitsauflagen genehmig wird.

Die GB 1 511 300 zeigt eine Schraubenspannvorrichtung mit einer aufgesetzten, pneumatisch angetriebenen Hydraulikpumpeneinheit.

Der Erfindung liegt die Aufgabe zu Grunde eine neuartige Schraubenspannvorrichtung zu schaffen, die die gleichen hohen Spannkräfte wie bisher hydraulisch arbeitende Schraubenspannvorrichtungen für hochfeste vorspannbare Schraubverbindungen erzeugen kann, die weniger Energieaufwand benötigt, die für alle Einsatzorte problemlos nutzbar ist und ein zugehöriges Steuerverfahren zu schaffen, welches eine genau dosierte Vorspannung ermöglicht.

Die Aufgabe wird erfindungsgemäß durch die Merkmale des ersten und des sechsten Patentanspruches gelöst. Die neuartige Schraubenspannvorrichtung zum Vorspannen und Lösen von hochfest vorspannbaren Schraubverbindungen besteht aus einem Schraubenspannzylinder 38 und einer hydraulischen Hochdruckpumpe 39. Der Schraubenspannzylinder 38 ist dabei so konstruiert und aufgebaut, dass im Inneren des Schraubenspannzylinders 38 eine hydraulische Hochdruckpumpe 39 integriert ausgeführt ist. Diese hydraulische Hochdruckpumpe 39 ist mit einem dichten hydraulischen Speicher 42 verbunden. Am oder im Schraubenspannzylinder 38 ist ein pneumatisch betätigbarer Antrieb 40 angeordnet. Der pneumatische Antrieb 40 kann wahlweise auf der konstruktiven Basis eines Membranzylinders 42 oder auch auf der Basis eines Kolbenzylinders ausgeführt sein. Zur Betätigung des pneumatischen Antriebs 40 ist dieser mit einer Druckluftzuführeinrichtung verbunden. Bei der neuartigen erfindungsgemäßen Schraubenspannvorrichtung erfolgt das Anziehen und Lösen nach dem an sich bereits bekannten Verfahren, die Schraube mittels einer hydraulischen Schraubenspannvorrichtung genau auf die gewünschte Vorspannkraft zu spannen, wobei sich die Schraubenspannvorrichtung an dem zu verspannenden Bauteil 1 bzw. Maschinenteil abstützt, und die Schraubenmutter der hochfest vorspannbaren Schraubverbindung anschließend lastfrei angezogen bzw. gelöst wird. Der Unterschied der erfindungsgemäßen Schraubenspannvorrichtung zu den bekannten Vorrichtungen besteht darin, dass der benötigte hohe hydraulische Druck von bis zu 1000 bar und gegebenenfalls darüber hinaus nicht durch eine zusätzliche teure gesonderte Hochdruckanlage zur Verfügung gestellt wird, sondern im speziell konstruktiv gestalteten Schraubenspannzylinder 38 selbst erzeugt wird. Der Einbau und die konstruktive Ausführung der mittels Druckluft angetriebenen hydraulischen Hochdruckpumpe 39 führt zu einer neuartigen Bauweise des Schraubenspannzylinders 38. Zum Antrieb des neuartigen Schraubenspannzylinders 38 wird nur noch Druckluft bis ca. 10 bar benötigt. Die Druckluftversorgung kann hierbei über einen einfachen und kostengünstigen Kompressor oder über eine handliche entsprechend gefüllte Druckluftflasche erfolgen.

Die integrierte hydraulische Hochdruckpumpe 39 wird dadurch realisiert, dass am oberen Ende des Schraubenspannzylinders 38 ein Pneumatikzylinder angebracht ist, welcher als Membranzylinder 41 oder Kolbenzylinder ausgeführt werden kann. An diesem Pneumatikzylinder ist eine Kolbenstange angebracht, welche in dem beweglichen Arbeitskolben 15 des Schraubenspannzylinders 38 eintaucht und dort als Verdrängerkolben bzw. Hochdruckkolben 9 wirkt. Durch das Flächenverhältnis zwischen Pneumatikzylinder und Verdrängerkolben wird hierbei das Verhältnis der Druckverstärkung zwischen hydraulischen und pneumatischen Druck bestimmt.

Im beweglichen Arbeitskolben 15 sind zwei Rückschlagventile 16 und 19 so angebracht, dass das verdrängte Hydraulikvolumen in den Kolbenringraum 43 gepumpt wird und bei Rückhub des Verdrängerkolbens Hydraulikflüssigkeit von dem Kolbenraum 44 in den Arbeitskolben 15 einströmt. Hierdurch wird eine Pumpwirkung erzielt und der Arbeitskolben 15 fährt solange ein, bis sich ein Kräftegleichgewicht im System einstellt. Durch Einstellung des jeweiligen Luftdruckes kann die Zugkraft am Arbeitskolben 15 und somit die Vorspannkraft in dem Gewindebolzen 2 definiert werden.

Durch die erfindungsgemäß ausgebildeten druckluftbetriebenen Schraubenspannzylinder 38 werden, die externe hydraulische Hochdruckpumpe und die Hochdruckleitungen komplett eingespart. Dadurch wird die Arbeit wesentlich vereinfacht und Kosten können erheblich gesenkt werden. Anstelle der externen hydraulischen Hochdruckpumpe ist nun eine sehr kleinbauende interne Hochdruckpumpe im speziell ausgebildeten Schraubenspannzylinder 38 integriert.

Bei einer bevorzugten Ausführung der erfindungsgemäßen Schraubenspannvorrichtung zum Vorspannen und Lösen von hochfest vorspannbaren Schraubverbindungen ist als Druckluftzuführeinrichtung eine entsprechend gefüllte Druckluftflasche über ein Druckluftregel- und Drucklufteinstellventil angeschlossen. Das hat den Vorteil, dass zum einem keinerlei lange Pneumatikschläuche eingesetzt werden müssen und auf eine externe Energiequelle vollständig verzichtet werden kann.

In einer anderen Ausbildung der erfindungsgemäßen Schraubenspannvorrichtung zum Vorspannen und Lösen von hochfest vorspannbaren Schraubverbindungen ist als Druckluftzuführeinrichtung ein Druckluftkompressor über ein Druckluftkompressorregel- und Drucklufteinstellventil angeschlossen. Dies ist unter anderem sinnvoll, wenn z. B. gleichzeitig mehrere Schraubenspannvorrichtungen mit Druck beaufschlagt werden müssen.

Die Vorteile liegen darin, dass anstelle der externen hydraulischen Hochdruckpumpe lediglich nur noch eine handliche Druckluftflasche mit einem entsprechenden Druckregelventil oder ein entsprechend leistungsstarker Druckluftkompressor benötig wird, bzw. statt der schwer handhabbaren hydraulischen Hochdruckleitungen werden nur noch handliche und kostengünstige Druckluftschläuche zur Verbindung von Schraubenspannvorrichtung zur Druckluftversorgung benötigt. Beim gleichzeitigen Einsatz von mehreren Schraubenspannvorrichtungen können die erforderlichen Verbindungen ebenfalls mit leicht handhabbaren Druckluftschläuchen erfolgen, welche u. a. auch mit wenig Aufwand vor Ort zugeschnitten und über standardmäßige Steckverbinder angeschlossen werden können. Die Druckluftschläuche lassen sich enger biegen als Hydraulikschläuche und benötigen hierbei wesentlich weniger Platz beim Transport und können im Einsatz auch unter Druckbeaufschlagung in engen Radien und sogar um Ecken verlegt werden.

Besonders handlich lässt sich die erfindungsgemäße Schraubenspannvorrichtung zum Vorspannen und Lösen von hochfest vorspannbaren Schraubverbindungen ausbilden, wenn der hydraulische Speicher 42 für die integrierte Hydraulikpumpe innen im Schraubenspannzylinder 38 selbst an geeigneter Stelle angeordnet ist. Dies ist vor allem günstig um eine hermetische Kapselung der Hydraulikpumpe erreichen zu können.

Das erfindungsgemäße Verfahren zur Steuerung eines Schraubenspannvorrichtung zum Vorspannen und Lösen von Schraubenverbindungen arbeitet, wie an sich bekannt, mit einer Hydraulikpumpe. Allerdings ist die Hydraulikpumpe als innen im Schraubenspannzylinder 38 speziell konstruierte Hochdruckpumpe 39 ausgebildet, die mit einem pneumatisch erzeugten Druck getaktet beaufschlagt wird. Dabei ist mittig ein Hochdruckkolben 9 so angeordnet, dass er auf der einen Seite über den Membranzylinder 41 mit pneumatischen Druck beaufschlagt wird, dieser eine Pumpbewegung ausführt und auf der anderen Seite die Hydraulikflüssigkeit der Hochdruckpumpe 39 aus der Bohrung im Arbeitskolben 45 in den Kolbenringraum drückt und ein Ausfahren des Arbeitskolbens 15 bewirkt. Durch die wiederholte Druckbeaufschlagung im Membranzylinder 41 wird eine oszillierende Bewegung des Hochdruckkolbens 9 erzeugt und der gewünschte Druck im Kolbenringraum 43 durch Sperrung mittels der Rückschlagventile 19 und 16 aufgebaut. Der getaktete Druck wird mittels eines Signals erzeugt, das über die Steuerleitung 46 ein Pneumatikventil 47 schaltet und damit die Druckluftzuführung zum Membranzylinder 41 unterbricht und entlüftet. Das Schaltsignal wird hierbei bei Erreichen der Endlage des Membranzylinders 41 dadurch erzeugt, dass die Ventilscheibe 12 durch die Öffhungsstifte 18 angehoben wird und die Entlüftungsbohrungen 14 freigibt.

Über die Steuerleitung 46 wird das erzeugte Schaltsignal an das Pneumatikventil 47 geleitet. Das in der Steuerleitung 46 angeordnete Rückschlagventil 48 verhindert ein Rückfließen der Druckluft. Über ein einstellbares Drosselventil 49 wird die Zeitdauer des Druckabfalls in der Steuerleitung 46 eingestellt, wobei damit das wiederholte Zurücksetzen des Pneumatikventils 47 erfolgt. Der Pumpvorgang wird solange wiederholt, bis sich ein Kräftegleichgewicht zwischen der Kraft im Membranzylinder 41 und am Hochdruckkolben 9 in der Bohrung im Arbeitskolben 45 einstellt. Das Aus- und Einschalten des pneumatischen Antriebes 40 erfolgt mittels eines dem Pneumatikventil 47 aufgeschaltetem manuell betätigbaren Pneumatikventils 50, wobei der Druck über ein vorgeschaltetes Druckregelventil eingestellt wird.

Der wesentliche Vorteil der erfindungsgemäßen Schraubenspannvorrichtung und des zugehörigen Steuerverfahrens besteht vor allem darin, dass keine weiten extern angeordneten Hydraulikpumpen und keine sperrigen Hydraulikhochdruckleitungen benötigt werden, das Energieökonomisch sehr hohe Spannkräfte erzeugt werden können, die gewünschte Vorspannkraft sehr einfach und hochgenau durch Einstellen des pneumatischen Druckes vor Ort erfolgen kann und eine sehr kompakte universell handhabbare Schraubenspannvorrichtung zur Nutzung an beliebigen Einsatzorten, wie zum Beispiel auch unter Wasser oder an beengten Montageorten bzw. an Orten ohne zusätzliche Energieversorgung geschaffen wurde. Im Gegensatz zu den bisher eingesetzten Vorrichtungen erfolg nur ein sehr geringer Einsatz von umweltschädlicher Hydraulikflüssigkeit. Zudem ist eine hermetische Kapselung gegeben, so dass keine Hydraulikflüssigkeit in die Umwelt gelangen kann.

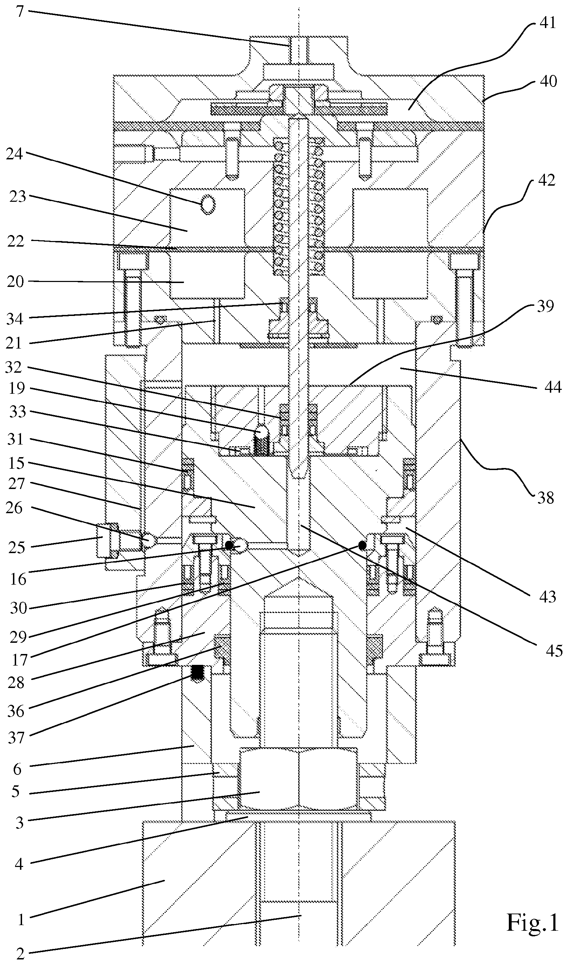

Die Erfindung wird nachfolgend anhand eines Ausführungsbeispiels näher erläutert. Hierzu dienen, die in Fig.1, Fig.2 und Fig.3 gezeigten Schnittdarstellungen.
- Fig. 1 zeigt: eine Schnittdarstellung einer Schraubenspannvorrichtung
- Fig. 2 zeigt: einen pneumatischen Antrieb 40 auf der Basis eines Membranzylinders 41 in oberer Endlage der Membran 11
- Fig. 3 zeigt: einen pneumatischen Antrieb 40 auf der Basis eines Membranzylinders 41 mit den zugehörigen Steuerelementen in der oberen Endlage des Arbeitskolbens 15 der hydraulischen Hochdruckpumpe 39

Ein hochfest zu verspannendes Bauteil 1, bei welchem es sich beispielsweise um den Anschluss eines Rotorblattes einer Windenergieanlage oder dem dazugehörigen Wälzlager handeln kann, soll über den Gewindebolzen 2 die Schraubenmutter 3 verspannt werden. Hierzu wird die Schraubenmutter 3 mit einer optional einsetzbaren Unterlegscheibe 4 zuerst von Hand auf den Gewindebolzen 2 geschraubt. Anschließend wird die mit einem Innensechskant versehene Nuss 5 zum späteren Beidrehen der Schraubenmutter 3 über die Schraubenmutter 3 geschoben und danach die gesamte Schraubenspannvorrichtung auf das überstehende Ende des Gewindebolzens 2 geschraubt. Das Gegenlager 6, womit sich die Schraubenspannvorrichtung gegen das zu verspannende Bauteil 1 abstützt, ist hierbei in Richtung des Schraubenspannzylinders 38 mit je nach Baugröße der Schraubenspannvorrichtung entsprechend dimensionierten über den Umfang verteilten Dauermagneten 37 versehen, wodurch das Gegenlager 6 am Schraubenspannzylinder 38 anhaftet und somit die Handhabung erleichtert wird. Ebenfalls ist hierdurch eine einfache Austauschbarkeit unterschiedlich dimensionierter Gegenlagers 6 für verschiedene Ausführungsformen der Schraubverbindung in der Länge des überstehenden Gewindeteils des Gewindebolzens 2 oder der entsprechenden Schraubenmutternhöhe oder der Unterlegscheibe 4 gegeben. Das Gegenlager 6 ist mit geeigneten Aussparungen versehen, um die Schraubenmutter 3 nach erfolgtem Vorspannen auf das zu verspannende Bauteil bzw. Maschinenteil 1 beidrehen zu können. Die Schraubenspannvorrichtung besteht aus dem Gegenlager 6 und dem eigentlich speziell ausgebildeten Schraubenspannzylinder 38. Der Schraubenspannzylinder 38 besteht aus einem Gehäuse in dessen Inneren eine hydraulische Hochdruckpumpe 39 einschließlich hydraulischen Speicher 42 und in dem im Kopfteil Teil ein pneumatischer Antrieb 40 integriert angeordnet sind. Oben am Schraubenspannzylinder 38 am pneumatischen Antrieb 40 ist mittig ein Druckluftanschluss 7 angeordnet an dem eine Druckluftzuführeinrichtung angeschlossen wird. Hierüber wird der jeweils zur hochfesten Vorspannung erforderliche Luftdruck zugeführt. Die jeweils gewünschte Vorspannkraft wird durch den entsprechend am pneumatischen Antrieb 40 eingestellten Luftdruck definiert.

Ein Vorteil besteht darin, dass dabei die Vorspannkraft stufenlos in sehr einfacher Art und Weise genauestens einstellbar ist. Durch den auf den Dichtscheibe 12 und die Membran 11 im Membrankolben 41 wirkende Druckluft, wird eine Druckkraft auf diese Teile ausgeübt, wobei sich der mit dem Hochdruckkolben 9 fest verbundene Teller 8 und damit der Hochdruckkolben 9 des pneumatischen Antriebes 40 gegen die Kraft der vorgespannten Druckfeder 10 nach unten bewegt. Die aus einem Elastomer bestehende Membran 11 dichtet hierbei den druckbeaufschlagten Raum des Membranzylinders 41 nach außen und zum inneren Raum im Membranzylinder 41 ab. Die ebenfalls aus einem Elastomer bestehende Dichtscheibe 12 ist mit einem metallischen Stützring 13 versehen und wird durch den Luftdruck auf die Membran 11 gedrückt und dichtet die Entlüftungsbohrungen 14 damit ab. Durch die Eintauchbewegung des Hochdruckkolbens 9 wird die Hydraulikflüssigkeit in der Bohrung (45) des Arbeitskolbens 15 verdrängt und über das sich öffnende Rückschlagventil 16 in den Kolbenringraum 43 gepumpt. Im beweglichen Arbeitskolben 15 wirken vorzugsweise zwei Rückschlagventile 16 und 19 so, dass beim Eintauchen des Hochdruckkolbens 9 das eine Rückschlagventil 19 geschlossen ist und das andere Rückschlagventil 16 geöffnet ist, so dass die verdrängte Hydraulikflüssigkeit in den Kolbenringraum 43 des Schraubenspannzylinders 38 gedrückt wird. Beim Rückhub des Hochdruckkolbens 9 schließt nunmehr das Rückschlagventil 16 und das Rückschlagventil 19 öffnet, so dass Hydraulikflüssigkeit aus dem Arbeitskolbenraum in die Bohrung 45 des Arbeitskolbens 15 einströmen kann.

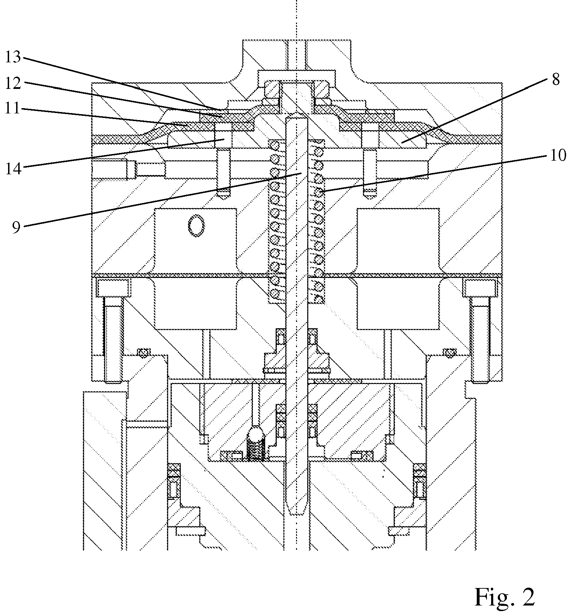

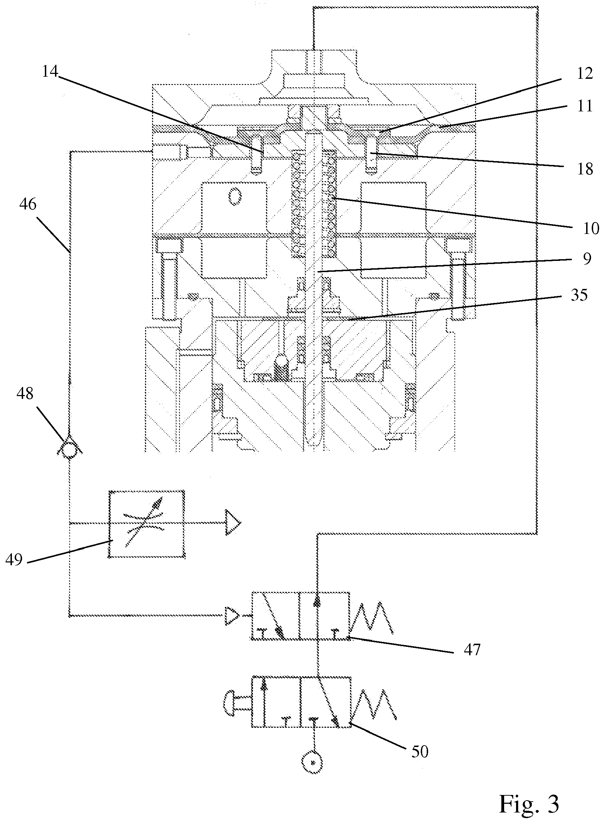

Das Rückschlagventil 16 wird dabei durch den am Dichtkörper anliegenden Elastomerring 17 und den erzeugten Druck im Kolbenringraum 43 nach Beendigung des Eintauchvorganges wieder geschlossen. Die Eintauchbewegung des Hochdruckkolbens 9 wird beendet, wenn, wie in Fig.3 dargestellt, die Öffnungsstifte 18 die Dichtscheibe 12 von der Membran 11 abheben und die Entlüftungsbohrungen 14 freigeben. In der Steuerleitung 46 wird hierdurch ein Drucksignal erzeugt, wodurch das Pneumatikventil 47 geschlossen wird und der Druckluftanschluss 7 entlüftet wird, so dass die Luft im Membranzylinder 41 entweichen kann. Dabei drückt nunmehr die vorgespannte Druckfeder 10 den Hochdruckkolben 9 mit dem daran befestigten Teller 8, die Membran 11 die Dichtscheibe 12 und den Stützring 13 zurück in die obere Endlage, wie in Figur 2 dargestellt. Das externe Rückschlagventil 48 verhindert dabei, dass die Steuerleitung 46 ebenfalls entlüftet wird und dass das Pneumatikventil 47 zu früh wieder geöffnet wird. Durch das Drosselventil 49 kann die Zeit für die Entlüftung der Steuerleitung 46 und somit der Zeitpunkt für die Öffnung des Pneumatikventils 47 genau eingestellt werden.

Auf diese Art und Weise kann die Geschwindigkeit des Pumpvorganges in der internen hydraulischen Hochdruckpumpe 39 geregelt werden. Zum Ein- und Ausschalten des Pumpvorganges dient das wahlweise auch manuell betätigbare Pneumatikventil 50. Diesem manuell betätigbaren Pneumatikventil 50 ist ein weiteres vorgeschaltetes Druckregelventil aufgeschaltet mit dem der gewünschte Arbeitsdruck und damit die Vorspannkraft der gesamten Schraubenspannvorrichtung genau eingestellt werden kann (in der Zeichnung in Figur 3 nicht benummert). Beim Erreichen der oberen Endlage wird die Dichtscheibe 12 wieder auf die Membran 11 gedrückt und verschließt die Entlüftungsbohrungen 14 erneut. Daraufhin kann sich der Luftdruck im Raum des Membranzylinders 41 wieder aufbauen und der Vorgang beginnt von neuem. Durch die Hin- und Herbewegung des Hochdruckkolbens 9 wird eine Pumpenwirkung erzielt wodurch Hydraulikflüssigkeit Kolbenraum 44 in den Kolbenringraum 43 gepumpt wird und der bewegliche Arbeitskolben 15 vom Gewindebolzen weg bewegt wird und dabei die gewünschte hohe Vorspannkraft erzeugt. Durch ein Drosselventil wird der Luftstrom am Druckluftanschluss 7 so eingestellt, dass die gewünschte Arbeitsgeschwindigkeit des Systems erreicht wird. Während der Ausfahrbewegung des Hochdruckkolbens 9 wird in der Bohrung 45 des Arbeitskolbens 15 ein Unterdruck erzeugt. Durch diesen Unterdruck und den hydraulischen Vordruck auf den Kolbenraum 44 öffnet sich das Rückschlagventil 19 wodurch Hydraulikflüssigkeit in die Bohrung 45 des Arbeitskolbens 15 einströmen kann. Der über den Versorgungsanschluss 24 einwirkende Vordruck bewirkt somit auch das schnelle Füllen der Bohrung 45 im Arbeitskolbens 15 durch das Rückschlagventil 19 bei der Ausfahrbewegung (Rückhub) des Hochdruckkolbens 9.

Beim Einfahren des Arbeitskolbens 15 muss die Differenz zwischen Kolbenfläche und Kolbenringfläche ausgeglichen werde. Das bedeutet das Volumen der einfahrenden Kolbenstange des Arbeitskolbens 15 muss auf der Kolbenraumseite ausgeglichen werden. Hierzu dient der Volumenausgleichsraum 20, welcher als hydraulischer Speicher 42 dient, und der mit Hydraulikflüssigkeit gefüllt ist und über die Bohrungen 21 mit dem Kolbenraum 44 verbunden ist. Über den Volumenausgleichsraum 20 dient die, aus einem Elastomer bestehende, Ausgleichsmembran 22 zur Abdichtung des hydraulischen Speichers 42 gegenüber dem Luftspeicher 23. Im Luftspeicher 23 wird über den Versorgungsanschluss 24 ein gewünschter Luftdruck bis maximal 10 bar angelegt. Auf diese Weise ist auch die Hydraulikflüssigkeit über die Ausgleichsmembran 22 mit diesem Vordruck beaufschlagt. Die durch die Einfahrbewegung des Arbeitskolbens 15, das bedeutet ein Wegbewegen von dem Gewindebolzen 2, kann die verdrängte Hydraulikflüssigkeit jetzt im Volumenausgleichsraum 20 aufgenommen und gespeichert werden.

Beim Erreichen der oberen Endlage des Arbeitskolbens 15 dient die Elastomerscheibe 35 dazu, dass der Zufluss der Hydraulikflüssigkeit zum Rückschlagventil 19 zuverlässig unterbrochen wird und somit keine Hydraulikflüssigkeit mehr in den Kolbenringraum 43 gepumpt werden kann. Ein weiteres Einfahren des Arbeitskolbens 15 bzw. ein damit verbundener Druckaufbau im aktiven Kolbenringraum 43 wird verhindert und der Druck im Kolbenringraum 43 bleibt solange erhalten, bis die Schraubenmutter 3 beigedreht ist.

Dadurch wird verhindert, dass auf die Flanschverbindungen am Schraubenspannzylinder keine allzu großen Kräfte auftreten, wodurch eine leichtere und platzsparende Bauweise möglich ist.

Nach erfolgtem hochfesten Vorspannen der Schraube 2 und dem Beidrehen der Schraubenmutter 3 mittels eines geeigneten durch die Aussparungen eingreifenden Werkzeuges wird der Druckluftanschluss 7 geschlossen und über das Bypassventil 25 wird das Sitzventil 26 geöffnet, wodurch die Hydraulikflüssigkeit aus dem Kolbenringraum 43 entweichen kann und über die Nut 27 zum Kolbenraum 44 strömt. Somit fällt die erzeugte Vorspannkraft am beweglichen Arbeitskolben 15 ab. Durch den, im System eingestellten Vordruck des Luftspeichers 23 und die Differenz von Kolbenfläche zu Kolbenringfläche entsteht eine ausreichende Druckkraft, welche den Arbeitskolben 15 nach dem entspannen mittels des Bypassventils 25 zum Schluss in die Ausgangsstellung gegen den Zylinderboden 28 zurück fährt. Durch diese Druckkraft wird ebenfalls erreicht, dass der Arbeitskolben 15 sich in seiner Ausgangsstellung gegen den Zylinderboden 28 verspannt und somit in sich gegen verdrehen gesichert wird. Diese Verdrehsicherung wird immer dann benötigt, wenn der Schraubenspannzylinder 38 auf den Gewindebolzen 2 drauf bzw. wieder nach dem Vorspannvorgang herunter geschraubt wird.

Zum Abdichten des gesamten hydraulischen Systems innerhalb der hydraulischen Hochdruckpumpe 39 im ihrem Inneren und nach Außen hin dienen verschiedene Dichtungen 29, 30, 31, 32, 33, welche trotz der hohen Drücke zuverlässig abdichten. Die Vordruckdichtung 34 muss dagegen lediglich dem eingestellten Vordruck von bis zu 10 Bar standhalten. Zum zusätzlichen Schutz gegen Verschmutzung der Dichtungen und der Hydraulikflüssigkeit dient der Abstreifer 36.

### Bezugszeichenliste

- 1: zu verspannendes Bauteil
- 2: Gewindebolzen
- 3: Schraubenmutter
- 4: Unterlegscheibe
- 5: Nuss mit Innensechskant
- 6: Gegenlager
- 7: Druckluftanschluss
- 8: Teller
- 9: Hochdruckkolben
- 10: Druckfeder
- 11: Membran
- 12: Dichtscheibe
- 13: Stützring
- 14: Entlüftungsbohrung
- 15: Arbeitskolben
- 16: Rückschlagventil
- 17: Elastomerring
- 18: Öffnungsstifte
- 19: Rückschlagventil
- 20: Volumenausgleichraum
- 21: Bohrungen zwischen Kolbenraum und Volumenausgleichsraum
- 22: Ausgleichsmembran
- 23: Luftspeicher
- 24: Versorgungsanschluss
- 25: Bypassventil
- 26: Sitzventil
- 27: Nut
- 28: Zylinderboden
- 29: Dichtung
- 30: Dichtung
- 31: Dichtung
- 32: Dichtung
- 33: Dichtung
- 34: Vordruckdichtung
- 35: Elastomerscheibe
- 36: Abstreifer
- 37: Dauermagnete
- 38: Schraubenspannzylinder
- 39: Hochdruckpumpe
- 40: pneumatischer Antrieb
- 41: Membranzylinder
- 42: Hydraulischer Speicher
- 43: Kolbenringraum
- 44: Kolbenraum
- 45: Bohrung im Arbeitskolben
- 46: Steuerleitung
- 47: Pneumatikventil
- 48: Rückschlagventil
- 49: Drosselventil
- 50: manuell betätigbares Pneumatikventil

## Patentansprüche

1. Schraubenspannvorrichtung zum Vorspannen und Lösen von hochfest vorspannbaren Schraubverbindungen bestehend aus einer hydraulischen Hochdruckpumpe (39) und einem Schraubenspannzylinder (38) mit einem Arbeitskolben (15), der auf einen Gewindebolzen (2) der zu verspannenden Schraube aufschraubbar ist,
**dadurch gekennzeichnet,**
**dass** im Schraubenspannzylinder (38) innen eine hydraulische Hochdruckpumpe (39) integriert ausgeführt ist,
die hydraulische Hochdruckpumpe (39) mit einem hydraulischen Speicher (42) verbunden ist,
**dass** am oder im Schraubenspannzylinder (38) ein pneumatisch betätigbarer Antrieb (40) angeordnet ist,
wobei der pneumatische Antrieb (40) auf Basis eines Membranzylinders (42) oder eines Kolbenzylinders ausgeführt ist,
der pneumatisch betätigbare Antrieb (40) einen Hochdruckkolben (9) antreibt und
der pneumatische Antrieb (40) mit einer Druckluftzuführeinrichtung verbunden ist.

2. Schraubenspannvorrichtung zum Vorspannen und Lösen von hochfest vorspannbaren Schraubverbindungen nach Anspruch 1,
**dadurch gekennzeichnet,**
**dass** als Druckluftzuführeinrichtung eine Druckluftflasche über ein Druckluftregel- und Drucklufteinstellventil angeschlossen ist.

3. Schraubenspannvorrichtung zum Vorspannen und Lösen von hochfest vorspannbaren Schraubverbindungen nach Anspruch 1,
**dadurch gekennzeichnet,**
**dass** als Druckluftzuführeinrichtung ein Druckluftkompressor über ein Druckluftkompressorregel- und Drucklufteinstellventil angeschlossen ist

4. Schraubenspannvorrichtung zum Vorspannen und Lösen von hochfest vorspannbaren Schraubverbindungen nach Anspruch 1,
**dadurch gekennzeichnet,**
**dass** der hydraulische Speicher (42) innen im Schraubenspannzylinder (38) angeordnet ist.

5. Schraubenspannvorrichtung zum Vorspannen und Lösen von hochfest vorspannbaren Schraubverbindungen nach Anspruch 4,
**dadurch gekennzeichnet,**
**dass** die hydraulische Hochdruckpumpe (39 aus in einem Gehäuse geführten Arbeitskolben (15) besteht,
im Arbeitskolben 15 zentrisch eine Bohrung (45) angeordnet ist,
in die Bohrung (45) ein druckbeaufschlagter Hochdruckkolben (9) eingreift,
die Bohrung (45) über zwei Rückschlagventile (16 und 19) mit dem Kolbenraum (44) und dem Kolbenringraum (43) verbunden ist
der Kolbenringraum (43) mit dem Kolbenraum (44) über ein Sitzventil 25 mittels einer Nut (27) untereinander verbunden sind
und im Gehäuse ein Volumenausgleichsraum (20) angeordnet ist.

6. Verfahren zur Steuerung einer Schraubenspannvorrichtung zum Vorspannen und Lösen von Schraubenverbindungen mit einer Hydraulikpumpe,
**dadurch gekennzeichnet,**
**dass** mittels eines pneumatischen Antriebes (40) ein Hochdruckkolben (9) getaktet in einer innen in einem Schraubenspannzylinder (38) liegenden Hochdruckpumpe (39) wiederholt mit Druck beaufschlagt wird,
**dass** in einer Endlage mittels eines Pneumatikventils (47) über eine Steuerleitung (46) indem ein Rückschlagventil (48) wirkt,
ein druckluftbeaufschlagter Membranzylinder (41) durch Öffnung einer Entlüftungsbohrung ein getaktetes Drucksignal erzeugt und ein Zurückfahren des Hochdruckkolbens (9) bewirkt, der Pumpvorgang wiederholt wird,
über ein Drosselventil (49) die Zeitdauer des Druckabfalls in einer Steuerleitung (46) einstellbar ist, wobei damit das Zurücksetzen des Pneumatikventils (47) erfolgt und das Aus und Einschalten des pneumatischen Antriebes (40) mittels eines dem Pneumatikventil (47) aufgeschaltetem manuell betätigbaren Pneumatikventil (50) erfolgt, wobei der Pumpvorgang solange wiederholt wird, bis sich ein Kräftegleichgewicht zwischen der Kraft im Membranzylinder (41) und am Hochdruckkolben (9) in der Bohrung im Arbeitskolben (45) einstellt.

## Claims

1. Bolt tensioning device for preloading and loosening high-strength preloadable threaded connections, consisting of a high-pressure hydraulic pump (39) and a bolt tensioning cylinder (38) having a working piston (15) which is screwable onto a threaded shank (2) of the bolt to be tensioned,
**characterized in that**
a high-pressure hydraulic pump (39) is integrated inside the bolt tensioning cylinder (38),
the high-pressure hydraulic pump (39) is coupled with a hydraulic accumulator (42),
a pneumatically operable drive (40) is disposed on or inside the bolt tensioning cylinder (38), wherein the pneumatic drive (40) is designed based on a diaphragm cylinder (42) or a piston cylinder,
the pneumatically operable drive (40) drives a high-pressure piston (9) and
the pneumatic drive (40) is coupled with a compressed air feeding device.

2. Bolt tensioning device for preloading and loosening high-strength preloadable threaded connections according to claim 1,
**characterized in that**
a compressed air bottle is coupled as a compressed air feeding device through a compressed air regulating valve and compressed air adjusting valve.

3. Bolt tensioning device for preloading and loosening high-strength preloadable threaded connections according to claim 1,
**characterized in that**
an air compressor is coupled as a compressed air feeding device through an air compressor regulating valve and compressed air adjusting valve.

4. Bolt tensioning device for preloading and loosening high-strength preloadable threaded connections according to claim 1,
**characterized in that**
the hydraulic accumulator (42) is disposed inside the bolt tensioning cylinder (38).

5. Bolt tensioning device for preloading and loosening high-strength preloadable threaded connections according to claim 4,
**characterized in that**
the hydraulic high-pressure pump (39) consists of a working piston (15) guided in a housing, a borehole (45) is disposed centrically in the working piston (15),
a pressurized piston (9) engages with the borehole (45),
the borehole (45) is in communication with the piston chamber (44) and the piston ring chamber (43) through two non-return valves (16 and 19),
the piston ring chamber (43) is in communication with the piston chamber (44) via a seat valve (25) and by means of groove (27) and
a volume-equalizing space (20) is disposed inside the housing.

6. Method for controlling a bolt tensioning device for preloading and loosening threaded connections using a hydraulic pump,
**characterized in that**
a high-pressure piston (9) in a high-pressure pump (39) disposed inside a bolt tensioning cylinder (38) is repeatedly pressurized in a cyclical manner by means of a pneumatic drive (40),
in an end position, by means of a pneumatic valve (47) via a control line (46), by the action of a non-return valve (48), a pressurized diaphragm cylinder (41), by opening a vent hole, generates a cyclic signal and causes the high-pressure piston (9) to retract,
the pump operation is repeated,
the time duration of the pressure drop in a control line (46) is adjustable by means of a throttle valve (49), whereby the pneumatic valve (47) is reset, and wherein the pneumatic drive (40) is switched off and on by means of a manually operable pneumatic valve (50) superimposed on the pneumatic valve (47),
wherein the pump operation is repeated until an equilibrium of forces is established between the forces acting in the diaphragm cylinder (41) and acting on the high-pressure piston (9) disposed in the borehole in the working piston (45).

## Revendications

1. Dispositif de serrage pour la mise en précontrainte et le desserrage de raccords filetés aptes à la précontrainte à haute résistance, constitué d'une pompe hydraulique à haute pression (39) et d'un vérin de serrage de boulons (38) pourvu d'un piston de travail (15) et pouvant être vissé sur une tige filetée (2) du boulon à serrer,
**caractérisé**
**en ce qu'**une pompe hydraulique à haute pression (39) est intégrée à l'intérieur du vérin de serrage de boulons (38),
**en ce que** la pompe hydraulique à haute pression (39) est reliée à un accumulateur hydraulique (42),
**en ce qu'**un actionneur (40) pneumatique est disposé sur ou dans le vérin de serrage (38), l'actionneur (40) pneumatique étant configuré à la base d'un vérin à diaphragme (42) ou d'un vérin à piston,
l'actionneur (40) pneumatique entraînant un piston haute pression (9) et
l'actionneur (40) pneumatique étant relié à un ensemble d'alimentation en air comprimé.

2. Dispositif de serrage pour la mise en précontrainte et le desserrage de raccords filetés aptes à la précontrainte à haute résistance selon la revendication 1,
**caractérisé**
**en ce qu'**une bouteille d'air comprimé est reliée en tant qu'ensemble d'alimentation en air comprimé par une valve de régulation de l'air air comprimé et une valve de réglage de l'air comprimé.

3. Dispositif de serrage pour la mise en précontrainte et le desserrage de raccords filetés aptes à la précontrainte à haute résistance selon la revendication 1,
**caractérisé**
**en ce qu'**un compresseur d'air est relié en tant qu'ensemble d'alimentation en air comprimé par une valve de régulation du compresseur d'air et une valve de réglage de l'air comprimé.

4. Dispositif de serrage pour la mise en précontrainte et le desserrage de raccords filetés aptes à la précontrainte à haute résistance selon la revendication 1,
**caractérisé**
**en ce que** l'accumulateur (42) hydraulique est disposé à l'intérieur du vérin de serrage (38).

5. Dispositif de serrage pour la mise en précontrainte et le desserrage de raccords filetés aptes à la précontrainte à haute résistance selon la revendication 4,
**caractérisé**
**en ce que** la pompe hydraulique à haute pression (39) est constituée d'un piston de travail (15) guidé dans un boîtier,
**en ce qu'**une forure (45) est placée au centre du piston de travail (15),
**en ce qu'**un piston haute pression (9), mis sous pression, s'engage dans la forure (45),
**en ce que** la forure (45) est reliée avec l'espace de piston (44) et l'espace de l'anneau de piston (43) par deux valves anti-retour (16 et 19),
**en ce que** l'espace de l'anneau de piston (43) est relié à l'espace de piston (44) par une valve à siège (25) et au moyen d'une rainure (27)
et **en ce qu'**une chambre d'équilibrage de volume (20) est disposée dans le boîtier.

6. Procédé pour commander un dispositif de serrage pour la mise en précontrainte et le desserrage de raccords filetés par une pompe hydraulique,
**caractérisé**
**en ce qu'**un piston à haute pression (9) d'une pompe à haute pression (39) disposée à l'intérieur d'un vérin de serrage (38) est répétitivement mis sous pression de manière cadencée au moyen d'un actionneur (40) pneumatique,
**en ce qu'**en position finale et au moyen d'une valve pneumatique (47), via une ligne de commande (46) par l'action d'une valve anti-retour (48), un vérin à diaphragme (41) mis sous pression génère un signal de pression cadencé par l'ouverture d'un orifice d'évacuation d'air ramenant le piston haute pression (9),
**en ce que** le pompage est répétée,
**en ce que** la durée de la chute de pression dans une ligne de commande (46) est réglable au moyen d'une valve d'étranglement (49), la valve pneumatique (47) étant remise par cela, et la mise en marche et en arrêt de l'actionneur (40) pneumatique s'effectuant au moyen d'une valve pneumatique (50) actionnable manuellement et imposée sur la valve pneumatique (47), le pompage se répétant tant qu'un équilibre de la force agissant dans le vérin à diaphragme (41) et celle agissant sur le piston haute pression (9) soit établi dans la forure du piston de travail (45).
